Europäisches Patentamt

European Patent Office

Office européen des brevets

(11) Publication number: **0 124 567**
**B1**

# EUROPEAN PATENT SPECIFICATION

(45) Date of publication of patent specification: **05.11.86**

(21) Application number: **83903552.4**

(22) Date of filing: **25.10.83**

(86) International application number:
**PCT/GB83/00274**

(87) International publication number:
**WO 84/01806 10.05.84 Gazette 84/12**

(51) Int. Cl.⁴: **F 16 K 31/40, F 16 K 47/00,
F 16 K 25/00**

(54) **VALVES.**

(30) Priority: **26.10.82 GB 8230567**

(43) Date of publication of application:
**14.11.84 Bulletin 84/46**

(45) Publication of the grant of the patent:
**05.11.86 Bulletin 86/45**

(84) Designated Contracting States:
**GB**

(56) References cited:
**US-A-2 291 101
US-A-2 584 419
US-A-2 868 492
US-A-3 083 941
US-A-4 284 260**

(73) Proprietor: **POTTERTON INTERNATIONAL
LIMITED
Portobello Works Emscote Road
Warwick CV34 5QU (GB)**

(72) Inventor: **WILSON, Alan
22 Kestrel Close Woodside Park Marchwood
Southampton S04 4XL (GB)**

(74) Representative: **Colgan, Stephen James et al
CARPMAELS & RANSFORD
43 Bloomsbury Square
London WC1A 2RA. (GB)**

Courier Press, Leamington Spa, England.

## Description

This invention relates to valves.

Solenoid valves, and in particular solenoid operated diaphragm valves, are generally quick-acting. This characteristic is in many cases undesirable because quick-acting valve closure can generate sharp rises in pressure resulting in the phenomenon known as surge pressure or "water-hammer". Water-hammer is in many cases audible and can cause damage or destruction to fluid systems, in particular to joints and seals. A typical example of a quick-acting solenoid-operated diaphragm valve is described in US—A—2291101.

According to the invention there is provided a valve comprising:

a fluid inlet chamber;

a fluid outlet chamber;

a bellows chamber defined by a bellows and communicating with the inlet chamber via a bleed hole,

a discharge passage capable of communicating the bellows chamber with the outlet chamber, and

actuator means which:

(i) when the valve is to be opened, opens the discharge passage to put the bellows chamber into communication with the outlet chamber, and

(ii) when the valve is to be closed, closes the discharge passage to stop the communication between the bellows chamber and the outlet chamber, whereby the pressure in the bellows chamber gradually increases, by virtue of said bleed hole;

characterised in that

a restrictor is provided having at least one aperture and disposed between the inlet and outlet chambers;

at least one of the restrictor and an end portion of the bellows being flexible and the restrictor and bellows end portion being so mounted that they can abut one another or can come out of or into abutment by virtue of a movement that at least includes flexure of at least one of the restrictor and bellows end portion, the at least one aperture in the restrictor being closed or opened depending upon whether the restrictor and bellows end portion are or are not in abutment, and the arrangement being such that

(i) when the valve is to be opened, the resultant drop in pressure in the bellows chamber causes the restrictor and bellows end portion to come out of abutment to establish communication between the inlet and outlet chambers via the at least one aperture in the restrictor, and

(ii) when the valve is to be closed the restrictor and bellows end portion come into abutment to close the valve.

Thus, at least the closing action, and preferably also the opening action of a valve in accordance with the invention is gradual or damped.

In one embodiment of the invention described below the restrictor is fixed to or integral with a body of the valve. In another embodiment described below the restrictor comprises a movable seat which, in a closed position of the valve, seats against a fixed seat, and the bellows provides a biasing force tending to bias the movable seat towards the fixed seat, whereby:

(a) when the valve is opened, the change in the pressure difference across the movable seat due to the seat coming out of abutment with the bellows end portion enables the movable seat and bellows end portion to move away from the fixed seat in response to pressure changes within the chambers, thereby to increase the extent of communication between the inlet and outlet chambers, and

(b) when the valve is to be closed when the movable seat and bellows end portion are spaced from the fixed seat, the increase of the pressure in the bellows chamber by virtue of the bleed hole causes the movable seat first to come into contact with the fixed seat under the influence of hydraulic force resulting from the pressure change and said biasing force, so as partially to close the valve, after which the movable seat and bellows end portion come into abutment so as wholly to close the valve. Such a valve thus has a delayed multi-stage opening and closing action. For the valve to move from the closed to the open position, the bellows chamber pressure must first drop sufficiently to enable the movable seat and bellows end portion to come out of abutment, and a change in the pressure difference across the movable seat must take place via the aperture or apertures in the movable seat for the valve to adopt the open position. Closure involves a generally similar delayed, multi-stage action. Consequently, the chances of such a valve giving rise to problems associated with quick-acting valves, for example "water-hammer", are small, and water hammer should in fact be reduced to an acceptable level by using such valves.

In one embodiment of the invention described hereinbelow the actuator means comprises a solenoid, i.e. the valve is a solenoid valve. It is however within the scope of the invention for the actuator means to be driven by some other means than a solenoid or even to be manually operable.

In embodiments of the invention described below the end portion of the bellows is flexible and comprises a diaphragm, and the restrictor is substantially rigid. However, as indicated above, it is within the scope of the invention for the restrictor to be flexible instead of or as well as the bellows end portion.

The bellows may be of a variety of shapes. However, a generally frusto-conical shape, with the above-mentioned end portion at the narrower end, is preferred, because such a shape is believed to enhance stability and, where the restrictor comprises a movable seat, to provide good separation of the movable and fixed seats.

The aperture or apertures in the restrictor is or are preferably such that the total exposed area thereof, i.e. the area thereof via which the inlet and outlet chambers communicate, increases in a progressive manner as the restrictor and bellows end portion flex apart, which is believed to smooth the transition in the kinematic behaviour of the valve as the flexing apart takes place.

Valves embodying the invention may comprise means for varying the volume flow resistance of the discharge passage, when open, whereby the valve can adopt different stable positions in which the restrictor and bellows end portions are relatively flexed apart by respective different amounts. Such throttling of the discharge passage provides good control of the extent of opening of the valve.

The invention will now be further described, by way of illustrative and non-limiting example, with reference to the accompanying drawings, in which:

Figure 1 is a somewhat schematic sectional side view of a solenoid valve embodying the invention, the valve being shown in a closed position;

Figure 2 is a top plan view of a movable seat of the valve,

Figure 3 is a sectional side view of the movable seat;

Figure 4 is a view corresponding to Figure 1, but showing the valve during the course of movement from its closed position to an open position;

Figure 5 is a view corresponding to Figure 1, but showing the valve in its open position;

Figure 6 is a detail view of a modification of the valve in which the movable seat is secured in a different manner to a diaphragm;

Figure 7 is a view corresponding to Figure 1, showing other modifications that can be made to the valve;

Figures 8 and 9 are detail views of modifications that can be made to a body of the valve; and

Figures 10 to 12 show further modifications that can be made to the valves shown in the preceding figures.

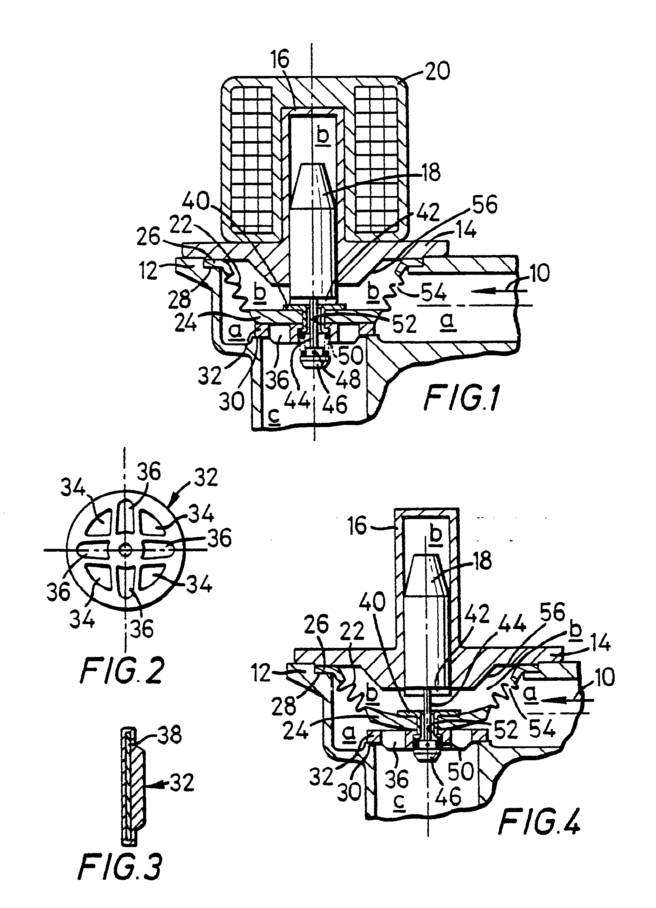

Figure 1 of the drawings shows a solenoid-operated diaphragm valve operative to control a fluid flowing therethrough in the direction of an arrow 10, the valve being represented in this Figure in its closed position. The valve comprises a body 12 of any suitable material, for example metal or plastics, and a chamber member 14 secured as shown within an opening in the body 12. The chamber member 14 is shaped like an inverted mushroom and includes a guide portion 16 for an armature 18 made from magnetic stainless steel. It also serves to support a solenoid 20. The chamber member 14 may be manufactured from any suitable material, for instance metal or plastics.

A bellows 22 is mounted within the valve body 12. The bellows is generally frusto-conically shaped and has its smaller end closed by a flexible, integral diaphragm 24. A flange 26 at the larger end of the bellows 22 is sealingly received between the valve body 12 and the chamber member 14. The frusto-conical shape of the bellows 22 enables good separation between a sealing face 28 of the body 12 that contacts the flange 26 and a fixed valve seat 30 for the valve provided on the body 12. The bellows 22 has an inbuilt spring rate which, in the light of its generally conical shape, results in good stability. This spring rate provides a force biasing the diaphragm 24, and a restrictor 32 secured thereto, towards the fixed valve seat 30. The bellows 22/diaphragm 24 is in this embodiment made of any suitable elastomeric material, for instance a rubber compound, but can be made of other materials such as stainless steel or plastics.

The restrictor 32, which in the present embodiment acts as a movable valve seat, is shown in more detail in Figures 2 and 3. The restrictor 32 is a disc-shaped member having a plurality of holes 34, 36 therethrough. The restrictor 32 is moulded from a suitable elastomeric material, for instance a soft rubber compound, to provide a good seal with the fixed valve seat 30. However, to keep the restrictor 32 reasonably rigid or stiff, it has an insert 38 (Figure 3) therein. A rivet 40 serves to secure the restrictor 32 to the diaphragm 24 in the region of the centre of each.

The armature 18 is provided with an annular elastomeric (e.g. rubber) seal 42 at its lower end as shown in Figure 1. A shaft 44 extends from the armature 18 through the seal 42 and the rivet 40, to the lower side (as shown in Figure 1) of the restrictor 32 and has a boss 46 mounted to its free end. The boss 46 is secured to the shaft 44 by means of a pin 48.

A stainless steel helical compression spring 50 acts between a recess in the lower face of the restrictor 32 and the boss 46 to provide a force resiliently biasing the seal 42 against a sealing face of the rivet 40. The spring rate of the spring 50 is arranged to be as low as possible in order to maintain a sealing force on a discharge hole 52 through which the shaft 44 extends with clearance, and to enable the sealing force to be removed with minimum solenoid power, Figure 1 showing the valve in the condition in which the solenoid 20 is not energised.

The interior of the valve body 12 can be considered as being divided, by the above-described components, into an inlet chamber or port *a*, a bellows chamber *b* and an outlet chamber or port *c*. In the closed condition of the valve illustrated in Figure 1, the outlet chamber *c* is, of course, isolated from the inlet chamber *a*. The outlet chamber *c* is also isolated from the bellows chamber *b* in that the discharge hole 52 is closed by the seal 42. One or more small bleed holes 54 are provided in the bellows 22 whereby, in the steady state, the pressure within the bellows chamber *b* will be equal to that in the inlet chamber *a*. By varying the size and number of the holes or apertures 54, one can vary the rate at which pressure equalisation will occur. The total area of the or each bleed hole 54 is less than the effective area of the discharge hole 52 that can be opened between the bellows chamber *b* and the outlet chamber *c*.

The operation of the illustrated valve will now be described. During its operation, the valve can be in any one of four states, two of which are static and two of which are transient. The two static states are "VALVE CLOSED" and "VALVE OPEN" and the two transient states are "VALVE CLOSING" and "VALVE OPENING". Each of these states will now be individually described.

## (a) VALVE CLOSED

Figure 1 shows the valve in its closed position. Under static pressure conditions, i.e. with zero pressure differential across the valve, the pressures in the chambers $a$, $b$ and $c$ will be approximately equal. The valve is maintained closed by the action of the bellows 22 which, because it has a nominal amount of pre-compression, pushes the diaphragm/movable valve seat restrictor assembly 24/32 towards the fixed valve seat 30. If pumped pressure is applied to the upstream side of the valve, i.e. if there is a pressure differential across the valve, the resultant forces on the assembly of the bellows 22, diaphragm 24 and movable valve seat restrictor 32 apply a net sealing force against the fixed valve seat 30 of a magnitude which is a function of the area of the outlet chamber $c$ where it meets the valve seat restrictor 32 and the corresponding area on the upper surface of the diaphragm 24 defined by upwardly projecting the area of the outlet chamber $c$. This sealing force is additional to that provided by the above-mentioned compression of the bellows. When the valve is closed, the higher the circulation pressure then the higher also is the sealing force.

## (b) VALVE OPENING (UNDER CIRCULATION PRESSURE)

The opening action is initiated by energisation of the coil of the solenoid 20, which causes the armature 18 to move into the solenoid 20, i.e. in the upward direction as shown in Figure 1. The spring 50 is compressed thereby to provide a force that opposes the biassing force provided by the bellows 22 and tends to move the movable valve seat restrictor 32 away from the fixed valve seat 30. Movement of the armature 18 also moves the seal 42 away from the sealing face of the rivet 40, which uncovers the discharge hole 52 and thus causes the pressure in the bellows chamber $b$ to tend to drop towards the pressure in the outlet chamber $c$. By virtue of the bleed hole(s) 54, as the pressure in the chamber $b$ tends towards that in the chamber $c$ the pressure in the inlet chamber $a$ will attempt to maintain the pressure in the chamber $b$. The rate at which these initial pressure changes occur will depend upon the ratio of the effective volume flow resistance of the discharge hole 52 to the total volume flow resistance of the bleed hole(s) 54.

The immediate effect of these various pressure changes is that the diaphragm 24 flexes or deforms away from the restrictor 32 in a generally conical manner, except of course where it is secured thereto by the rivet 40 adjacent the centre of each. The resultant flexing apart of the diaphragm 24 and restrictor 32 is shown in Figure 4.

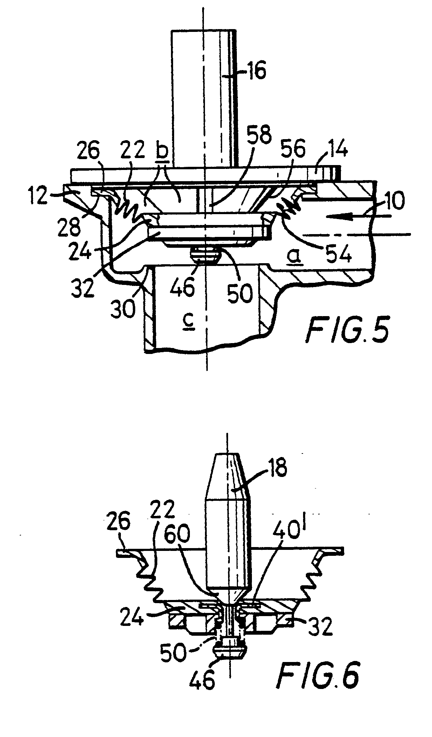

This flexing or deflection progressively uncovers the holes 34, 36 in the restrictor 32 in a radially inward sense resulting in a progressive and controlled increase in the discharge area available through the restrictor 32. This discharge area produces a tendency for equalisation of the pressure drop between the chambers $a$ and $c$. Initially, the pressure drop between the chambers $a$ and $c$ across the restrictor 32 is high. As a consequence, the resultant forces holding the restrictor 32 in place on the fixed valve seat 30 are of a greater magnitude than the opposing forces on the diaphragm 24, which gives rise to the conical flexing or deflection. However, the increase in the discharge area through the restrictor 32 increases the flow therethrough and reduces the pressure drop thereacross. This results in a reduction in the dynamic force holding the restrictor 32 in position. At the same time, the net dynamic force (due to pressure conditions) on the diaphragm 24 is reduced. By this time, however, the diaphragm 24 is nearing its maximum flexing or deformation and thus applies a maximum lifting force to the restrictor 32 via the connection afforded by the rivet 40. This force is supplemented by the biassing force caused by compression of the spring 50 due to the movement of the armature 18. Consequently, the movable valve seat restrictor 32 becomes dislodged from the valve seat and moves upwardly. Immediately after separation the diaphragm 24 loses its conical flexing or deflection whereby the restrictor 32 reverts to contact with the lower face of the diaphragm 24. The whole assembly continues to lift (due to a combination of solenoid pull and the application of pressure imbalance) until a steady open state of the valve is achieved, as shown in Figure 5. A conical surface 56 on the chamber member 14 supports the compressed bellows 22/diaphragm 24 in the open position of the valve.

## (c) VALVE OPEN

In the fully open position, as shown in Figure 5, the bellows 22/diaphragm 24 is held in position by the action of the solenoid 10, which remains energised. The hydraulic forces on the diaphragm 24 are stabilised by the fact that the pressure in the bellows chamber $b$ is maintained at a low level. This is so because a flow is maintained through the chamber $b$ via the discharge hole 52 and the bleed hole(s) 54, the flow resistance of the discharge hole 52 being less than that of the bleed hole(s) 54 whereby the net force on the diaphragm 24 is upward. A discharge channel 58 (Figure 5) is provided in the chamber member 14 to ensure that the discharge path from the bleed hole(s) 54 to the discharge hole 52 cannot be sealed by the diaphragm 24 pressing against the conical surface 56 of the chamber member 14.

## (d) VALVE CLOSING (UNDER CIRCULATION PRESSURE)

Closure of the valve is initiated by de-energisation of the solenoid 20. As the magnetic pull on the armature 18 decreases the spring 50 pulls the armature towards the diaphragm 24. The seal 42 covers the discharge hole 52. Sealing of the discharge hole 52 causes pressurisation of the bellows chamber *b* via the bleed hole(s) 54. The bellows chamber *b* fills and the assembly of the diaphragm 24 and the movable seat restrictor 32 moves towards the fixed valve seat 30. The pressure in the inlet chamber *a* slowly rises and the pressure in the outlet chamber *c* falls, though to a lesser extent. At a certain pressure, dictated by the physical parameters of the diaphragm 24 and the movable valve seat restrictor 32, the pressure difference between the chambers *a* and *c* causes the whole assembly to be thrust towards the fixed valve seat 30. Because the diaphragm 24 has a certain amount of inbuilt hydraulic damping, the restrictor 32 tries to separate from the diaphragm 24. That is to say, it moves towards the fixed valve seat 30 at a speed greater than that which the diaphragm 24 can accomplish. Since the restrictor 32 and diaphragm 24 are secured together at their centres, the diaphragm 24 flexes or deflects in a conical manner similar to that experienced during opening. Thus, at this precise moment, the components of the valve, with the exception of the armature 18, adopt a similar configuration to that shown in Figure 4. The foregoing action is accompanied by opening out of the bottom convolution of the bellows 22 and closing of the top convolution thereof. At this stage, the pressure in the inlet chamber *a* rises rapidly and the pressure in the outlet pressure *c* falls slightly. The bellows chamber *b* then fills via the bleed hole(s) 54 and the conical shape flattens out in an outward radial sense. As the line of contact between the diaphragm 24 and the restrictor 32 moves radially outwardly, the exposed or discharge area of the holes 34, 36 in the restrictor 32 is gradually decreased, whereby the pressure in the chamber *a* gradually increases and the pressure in the chamber *c* falls slightly. When the diaphragm 24 has flattened out so as completely to cover the restrictor 32, the flow through the valve ceases. However, flow continues for a while through the bleed hole(s) 54, causing the top convolution of the bellows 22 to settle. It is believed that this "over-run" phenomenon may be helpful in reducing the chances of the valve mechanism oscillating during closure. Note that, during this process, the amount of deformation of the diaphragm 24 is proportional to the pressure drop across the valve and thus can be said to adjust automatically.

The valve described above with reference to the drawings incorporates various advantageous features. The provision of the moving valve seat enables a controlled, two-stage closure to be achieved. The holes in the moving valve seat restrictor can be modified as desired to change the characteristics of the second stage of closure. The flexing or deflection of the diaphragm in a conical manner, in conjuction with the movable valve seat restrictor, enables controlled throttling of the valve near to the point of total closure. Connection of the armature to the bellows/diaphragm enables the valve to operate with a low pressure differential across it. The pressure differential across the valve is in fact used to assist in its operation. As mentioned above, the settling of the convolutions on the bellows is believed in some circumstances to act as a damping mechanism at the instant of closure. Finally, the overall conical shape of the bellows/diaphragm ensures stability and good separation of the mounting point of the bellows and the valve seat, enabling low resistance designs to be provided.

The invention can of course be performed in various other ways than that described above by way of example. For instance, the rivet 40 need not be separate from the diaphragm 24 as it is in the arrangement described above. Instead, as shown in Figure 6, the rivet (40') may be moulded in to the diaphragm 24. In this case, as also shown in Figure 6, the armature 18 may be modified to incorporate a conical or "pointed" lower end 60, in which case the seal 42 may be discarded.

The valve could also be modified by making the movable valve seat restrictor 32 flexible instead of or as well as the diaphragm 24. That is to say, the diaphragm 24 could be made rigid or replaced with a rigid member. The desired flexing apart will be obtained provided one or both of the two members is flexible.

It is not essential that the diaphragm 24 and the movable valve seat restrictor 32 be secured together. For example, the illustrated arrangements could be modified by removing the rivet 40 (and, preferably decreasing the diameter of the central hole in the diaphragm to be the same as the internal diameter of the rivet). Such a modified arrangement would work in a similar manner to that described above. In particular, the diaphragm 24 would still flex as described, though in most cases to a lesser degree (especially during the closing process) than in the illustrated arrangements. In the modified arrangement, the movement of the diaphragm 24 with respect to the restrictor 32 is translational and flexural rather than solely flexural.

In the arrangement described with reference to the drawings, energisation of the solenoid 20 not only opens communication between the chambers *b* and *c* but provides an opening force on the movable valve seat restrictor 32 that tends to move it away from the fixed seat 30. Such opening force assists the forces resulting from pressure changes to open the valve. The opening force is not however essential in this respect and the illustrated arrangements may therefore be modified such that substantially no such force is provided, the solenoid 20 acting only to establish and stop the communication between the chambers *b* and *c*.

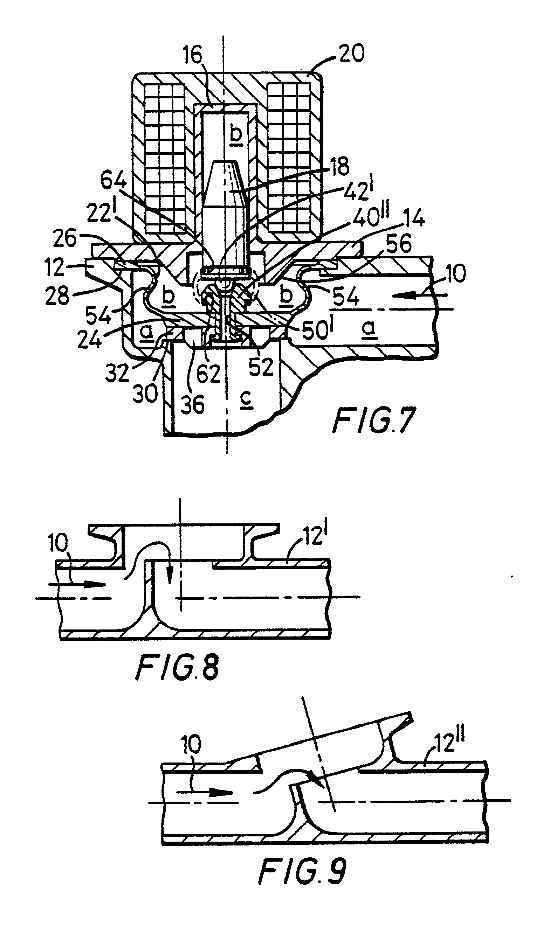

The valve could further be modified in the various ways now to be described with reference to Figure 7, which shows a modified form of valve. Figure 7 largely corresponds to Figure 1 and will only be described in so far as it differs from Figure 1. Items in Figure 7 that correspondd to like items in Figure 1 are identified by like references, whereas items in Figure 7 that correspond to but differ from items shown in Figure 1 are identified by like references with prime superscripts.

The rivet 40″ in Figure 7 differs from those 40, 40′ of Figures 1 and 6 in that, instead of having a flat upper surface that seals with an annular seal 42 on the armature 18, it receives a boss-like seal 42′ inside the mouth of the hole 52 therein. Also, the rivet 40″ has a lip 62 that receives one end of a helical tension spring 50′, the other end of which is received in a groove 64 in the armature 18. Thus, in this arrangement, the tension spring 50′ located in the bellows chamber b replaces the compression spring 50 located in the outlet chamber c in the valve of Figure 1, and there is no need for the shaft 44 extending through the hole 52 and the boss 46 thereon.

The valve of Figure 7 also differs from that of Figure 1 in that the bellows 22′ has a lesser number of convolutions and the convolutions are less angular and more sinuous. In this connection, the bellows employed in valves embodying the invention may be of a great variety of forms. For example, as just explained, the number and/or form of the convolutions may vary; and the bellows may in fact have no convolutions at all, being, for example, a simple cup-shaped member. Further, though it is preferred that, as in the arrangements described, the biassing force provided by the bellows be due to an inbuilt spring rate, i.e. to the bellows being of a resiliently deformable construction, it is within the scope of the invention for the bellows to comprise a floppy (non-resiliently deformable) bellows member in combination with one or more biassing springs.

In the arrangements described above, the bleed hole(s) 54 are located in the bellows 22, 22′ so as directly to communicate the inlet chamber a and bellows chamber b. This, however, is not essential. The bleed hole(s) 54 could be located elsewhere and might for example be constituted by a passage or passages communicating the two chambers, for instance the bore of a pipe extending from the bellows chamber b, possibly externally of the valve body 12, 12′ or 12″, to the inlet chamber a or to a position on an inlet pipe upstream of the valve body.

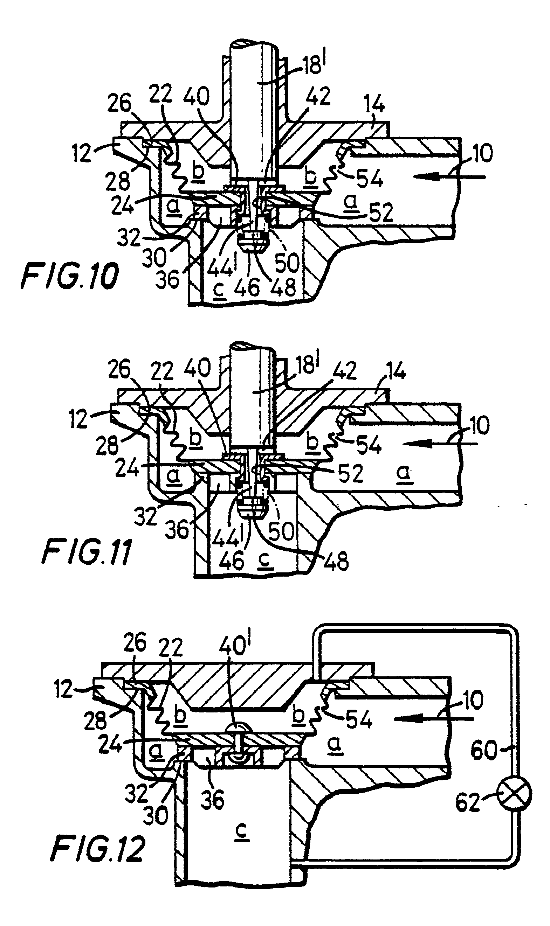

Although the preceding figures of the drawings show valves in which the inlet and outlet flow directions are at right angles, this relationship is by no means essential. The inlet and outlet directions may bear other relationships. Figures 8 and 9 show respective modified valve bodies 12′ and 12″ in both of which the flow inlet and outlet directions are aligned and in which, respectively, the actuating mechanism is positioned normally or inclined to such aligned directions.

Further modifications of the valves described above will now be described with reference to Figures 10 to 12, in which items corresponding to like items in the preceding figures are identified by like references and items corresponding to but different to items in the preceding figures are identified by like references with prime superscripts.

Figure 10 shows a valve which is similar to that of Figure 1, except that the shaft 44′ is tapered where by the effective area (and therefore the volume flow resistance) of the discharge hole 52 varies as the shaft 44 is moved away from the position shown, and the armature 18 is replaced by a member permitting continuous movement of the shaft. The consequence of this is as follows. For an initial range of movement of the shaft 44′ away from the position shown, the effective volume flow resistance of the discharge hole 52 is sufficiently small that, whereas the diaphragm flexes away from the restrictor 42 (as shown in Figure 4) to permit flow between the inlet and outlet chambers a and c via the apertures 34, 36 in the restrictor, the valve does not switch over to the fully open position shown in Figure 5. That is to say, within such range of positions of the shaft 44 the valve stays in a stable partially-open condition as shown in Figure 4. What is more, the extent of stable flexure of the diaphragm 24 within such range of positions of the shaft 44 is proportional to the position of the shaft, whereby the extent of opening of the valve can be proportionally controlled by throttling (controlling the volume flow resistance of) the discharge hole 52 by moving the shaft, which movement could be effected manually or mechanically. Only when the movement of the shaft 44 is such that the effective volume flow resistance of the hole 52 (with respect to that of the bleed hole(s) 54) exceeds a threshold value will the valve open fully as described above with reference to Figure 5.

If the area of the shaft 44 were varied in steps (rather than continuously) along its length, then stepwise (rather than continuous) proportional control of the extent of opening of the valve could be obtained in like manner, in which case movement of the shaft might likewise be continuous, the member 18′ being, for example, an armature of a multiposition solenoid.

It may be that, in some cases, opening and closure of the valve by flexing of the diaphragm 24 would be considered sufficient, the above-described full opening provided by movement of the restrictor 32 to the position of Figure 5 not being required. In that case, the arrangement of Figure 10 could be modified by fixing the restrictor 32 to the valve body 12. Alternatively, as shown in Figure 11, the restrictor 32 could be formed integrally with the valve body 12. In both of these cases, flow between the inlet takes place only via the apertures 34, 36 in the (fixed) restrictor 32, such flow being controlled by relative flexing of the restrictor and diaphragm 24.

In all the arrangements described above, the discharge hole 52 selectively connecting the bellows chamber b and the outlet chamber c is disposed within the valve, more specifically in the form of a hole extending through the diaphragm 24 and restrictor 32. This, however, is not essential. Figure 12 shows an alternative arrangement. In Figure 12, the diaphragm 24 and restrictor are shown secured together by a rivet 40', for example, which permits relative flexural (or flexural and translational) movement of these two components as described above, but does not provide a discharge passage connecting the bellows chamber $b$ and the outlet chamber $c$. Instead, the chambers $b$ and $c$ are interconnected by a discharge passage schematically represented as a duct or pipe 60 which may, as shown, be located outside of the valve body 12, the pipe 60 extending between the bellows chamber $b$ and a position on a pipe downstream of the outlet chamber $c$ or, as shown, directly to the chamber $c$.

A pilot valve 62 or tap or the like is provided in the pipe 60. The pilot valve 62 may, for example, be a two-position (ON or OFF) valve, in which case opening or stopping of communication between the chambers $b$ and $c$ by operation of the pilot valve causes operation of the valve proper in the same way as the valve of Figures 1 to 5 is operated when the solenoid 20 is energised or de-energised. Alternatively, the position of the pilot valve 62 (i.e. the extent of opening thereof) may be continuously or step-wise variable, in which case the valve can be operated in a proportional fashion in like manner to the valve described above with reference to Figure 10.

If such proportional control of the extent of opening of the valve of Figure 12 is considered sufficient, i.e. if full opening of the valve by bodily movement of the restrictor 32 to the position of Figure 5 is not required, the valve of Figure 12 could be modified by fixing the restrictor to the valve body 12 or, as described above with references to Figure 11, by forming the restrictor integrally with the valve body.

**Claims**

1. A valve comprising:
a fluid inlet chamber ($a$),
a fluid outlet chamber ($c$),
a bellows chamber ($b$) defined by a bellows (22) and communicating with the inlet chamber ($a$) via bleed hole (54),
a discharge passage (52) capable of communicating the bellows chamber ($b$) with the outlet chamber ($c$), and
actuator means (20) which:
(i) when the valve is to be opened, opens the discharge passage (52) to put the bellows chamber ($b$) into communication with the outlet chamber ($c$), and
(ii) when the valve is to be closed, closes the discharge passage (52) to stop the communication between the bellows chamber ($b$) and the outlet chamber ($c$), whereby the pressure in the bellows chamber ($b$) gradually increases, by virtue of said bleed hole (54);
characterised in that
a restrictor (32) is provided having at least one aperture (34, 36) and disposed between the inlet and outlet chambers ($a$, $c$),
at least one of the restrictor (32) and an end portion (24) of the bellows (22) being flexible and the restrictor (32) and bellows end portion (24) being so mounted that they can abut one another or can come out of or into abutment by virtue of a movement that at least includes flexure of at least one of the restrictor (32) and bellows end portion (24), the at least one aperture (34, 36) in the restrictor (32) being closed or opened depending upon whether the restrictor (32) and bellows end portion (24) are or are not in abutment, and the arrangement being such that
(i) when the valve is to be opened, the resultant drop in pressure in the bellows chamber ($b$) causes the restrictor (32) and bellows end portion (24) to come out of abutment to establish communication between the inlet and outlet chambers ($a$, $c$) via the at least one aperture (34, 36) in the restrictor (32), and
(ii) when the valve is to be closed the restrictor (32) and bellows end portion (24) come into abutment to close the valve.

2. A valve according to claim 1, wherein the restrictor (32) comprises a movable seat which, in a closed position of the valve, seats against a fixed seat (30), and the bellows (22) provides a biasing force tending to bias the movable seat towards the fixed seat (30), whereby:
(a) when the valve is opened, the change in the pressure difference across the movable seat due to the seat coming out of abutment with the bellows end portion (24) enables the movable seat and bellows end portion (24) to move away from the fixed seat (30) in response to pressure changes within the chambers, thereby to increase the extent of communication between the inlet and outlet chambers ($a$, $c$), and
(b) when the valve is to be closed when the movable seat and bellows end portion (24) are spaced from the fixed seat (30), the increase of the pressure in the bellows chamber ($b$) by virtue of the bleed hole (54) causes the movable seat first to come into contact with the fixed seat (30) under the influence of hydraulic force resulting from the pressure change and said biasing force, so as partially to close the valve, after which the movable seat and bellows end portion (24) come into abutment so as wholly to close the valve.

3. A valve according to claim 2, wherein the movable seat and bellows end portion (24) are secured together (40) in such a manner as to prevent relative translational movement, whereby said movement of the movable seat and bellows end portion (24) as they come into or out of abutment substantially wholly comprises flexure of at least one of the movable seat and bellows end portion (24).

4. A valve according to claim 2, wherein the movable seat and bellows end portion (24) are so mounted that said movement of the movable seat and bellows end portion (24) as they come into or out of abutment comprises relative translational movement of the movable seat and bellows end portion (24) as well as flexure of at least one of the movable seat and bellows end portion (24).

5. A valve according to any one of claims 2, 3 and 4, wherein said biasing force provided by

the bellows is due to the bellows (22) being of a resiliently deformable construction.

6. A valve according to any one of claims 1 to 5, wherein the end portion (24) of the bellows is flexible and comprises a diaphragm, and the restrictor (32) is substantially rigid.

7. A valve according to any one of claims 1 to 5, wherein the end portion (24) of the bellows is flexible and comprises a diaphragm, and the restrictor (32) is flexible.

8. A valve according to any one of claims 1 to 5, wherein the end portion (24) of the bellows is substantially rigid, and the restrictor (32) is flexible.

9. A valve according to any one of the preceding claims, wherein the bellows (22) is of a generally frusto-conical shape with said end portion (24) being at the narrower end.

10. A valve according to any one of claims 1 to 9, wherein the discharge passage (52) comprises a hole through the bellows end portion (24) and the restrictor (32), and the actuator means (20) comprises a member (18) movable with respect to the bellows end portion (24) and restrictor (32) so as to open or close the hole through the bellows end portion (24) and restrictor (32) to put the bellows chamber (b) into communication with the outlet chamber (c) or to stop communication between the bellows chamber (b) and the outlet chamber (c).

11. A valve according to claim 10, wherein said member (18) is an armature of a solenoid.

12. A valve according to any one of claims 1 to 9, wherein the discharge passage (52) comprises a duct extending between the bellows chamber (b) and the outlet chamber (c) and the actuator means (20) comprises means (42) for opening and closing the duct.

13. A valve according to any one of the preceding claims, comprising means (44) for varying the volume flow resistance of the discharge passage (52), when open, whereby the valve can adopt different stable positions in which the restrictor (32) and bellows end portions (24) are relatively flexed apart by respective different amounts.

14. A valve according to any one of the preceding claims, wherein the at least one aperture (34, 36) in the restrictor (32) is such that the exposed area thereof increases in a progressive manner as the restrictor (32) and bellows end portion (24) flex apart.

15. A valve according to any one of the preceding claims, wherein the at least one bleed hole (54) comprises a hole in the bellows (22) that directly communicates the bellows chamber (b) and inlet chamber (a).

**Patentansprüche**

1. Ventil mit
einer Fluideinlaßkammer (a),
einer Fluidauslaßkammer (c),
einer Faltenbalgkammer (b), die von einem Faltenbalg (22) begrenzt wird und über eine Zulauföffnung (54) mit der Einlaßkammer (a) in Verbindung steht,

mit einem Abführkanal (52), über welchen die Faltenbalgkammer (b) mit der Auslaßkammer (c) verbindbar ist, und

mit einer Betätigungseinrichtung (20), welche

(i) den Abführkanal (52) öffnet, wenn das Ventil geöffnet werden soll, um die Faltenbalgkammer (b) in Verbindung mit der Auslaßkammer (c) zu bringen, und

(ii) den Abführkanal (52) schließt, wenn das Ventil zu schließen ist, um die Verbindung zwischen der Faltenbalgkammer (b) und der Auslaßkammer (d) zu beenden, wodurch der Druck in der Faltenbalgkammer (b) allmählich aufgrund der Zulauföffnung (54) ansteigt, dadurch gekennzeichnet, daß ein

Begrenzer (32) vorgesehen ist, der wenigstens eine Öffnung (34, 36) aufweist und zwischen der Einlaßkammer (a) und der Auslaßkammer (c) angeordnet ist, und

daß wenigstens der Begrenzer (32) oder ein Endabschnitt (24) des Faltenbalges (22) elastisch und der Begrenzer (32) und der Endabschnitt (24) des Faltenbalges derart angeordnet sind, daß sie aneinanderstoßen können oder aus der gegenseitigen Anlage oder in die gegenseitige Anlage gelangen können infolge einer Bewegung, welche wenigstens die Biegung wenigstens des Begrenzers (32) oder des Endabschnitts (24) des Faltenbalges umfaßt, wobei wenigstens eine der Öffnungen (34, 36) in dem Begrenzer (32) geschlossen oder geöffnet wird abhängig davon, ob der Begrenzer (32) und der Endabschnitt (24) des Faltenbalges in gegenseitiger Anlage sind oder nicht, und daß die Anordnung derart ist, daß

(i) wenn das Ventil zu öffnen ist, der sich ergebende Druckabfall in der Faltenbalgkammer (b) bewirkt, daß der Begrenzer (32) und der Endabschnitt (24) des Faltenbalges aus der gegenseitigen Anlage gelangen, um eine Verbindung zwischen der Einlaßkammer (a) und der Auslaßkammer (c) über wenigstens die eine Öffnung (34, 36) in dem Begrenzer (32) herzustellen, und,

(ii) wenn das Ventil zu schließen ist, der Begrenzer (32) und der Endabschnitt (24) des Faltenbalges in Anlage gelangen, um das Ventil zu schließen.

2. Ventil nach Anspruch 1, dadurch gekennzeichnet, daß der Begrenzer (32) einen verschiebbaren Sitz aufweist, welcher in der Schließstellung des Ventils gegen einen festen Sitz (30) ansteht und daß der Faltenbalg (22) eine Vorspannkraft erbringt, welche dazu neigt, den verschiebbaren Sitz gegen den festen Sitz (30) vorzuspannen, wodurch,

(a) wenn das Ventil geöffnet ist, die Veränderung in der Druckdifferenz über den verschiebbaren Sitz, wenn der Sitz außer Anlage mit dem Endabschnitt (24) des Faltenbalges gelangt, ermöglicht, daß der verschiebbare Sitz und der Endabschnitt (24) des Faltenbalges sich von dem festen Sitz (30) entfernen ansprechend auf Druckwechsel innerhalb der Kammern, um dadurch das Maß der Verbindung zwischen der Einlaßkammer (a) und der Auslaßkammer (c) zu erhöhen, und,

(b) wenn das Ventil zu schließen ist, wenn der verschiebbare Sitz und der Endabschnitt (24) des Faltenbalges sich im Abstand zu dem festen Sitz (30) befinden, das Ansteigen des Druckes in der Faltenbalgkammer (b) über die Zulauföffnung (54) bewirkt, daß der verschiebbare Sitz zuerst in Berührung kommt mit dem festen Sitz (30) unter dem Einfluß der hydraulischen Kraft, die aus dem Druckwechsel und der Vorspannkraft resultiert, so daß das Ventil teilweise geschlossen wird, wonach der verschiebbare Sitz und der Endabschnitt (24) des Faltenbalges in gegenseitige Anlage gelangen, um das Ventil vollständig zu schließen.

3. Ventil nach Anspruch 2, dadurch gekennzeichnet, daß der verschiebbare Sitz und der Endabschnitt (24) des Faltenbalges untereinander befestigt (40) sind, derart, daß eine Relativverschiebung verhindert wird, wodurch die Bewegung des verschiebbaren Sitzes und des Endabschnitts (24) des Faltenbalges, wenn sie in oder außer Anlage gelangen, im wesentlichen eine vollständige Biegung wenigstens des verschiebbaren Sitzes oder des Endabschnitts (24) des Faltenbalges umfaßt.

4. Ventil nach Anspruch 2, dadurch gekennzeichnet, daß der verschiebbare Sitz und der Endabschnitt (24) des Faltenbalges derart angeordnet sind, daß die Bewegung des verschiebbaren Sitzes und des Endabschnittes (24) des Faltenbalges, wenn sie in oder außer Anlage gelangen, eine relative Translationsverschiebung des verschiebbaren Sitzes und des Endabschnitts (24) des Faltenbalges als auch eine Biegung wenigstens des verschiebbaren Sitzes oder des Endabschnitts (24) des Faltenbalges umfaßt.

5. Ventil nach einem der Ansprüche 2 bis 4, dadurch gekennzeichnet, daß die von dem Faltenbalg bewirkte Vorspannkraft verursacht wird, weil der Faltenbalg (22) einen elastischen, verformbaren Aufbau aufweist.

6. Ventil nach einem der Ansprüche 1 bis 5, dadurch gekennzeichnet, daß der Endabschnitt (24) des Faltenbalges flexibel ist und eine Membran aufweist, und daß der Begrenzer (32) im wesentlichen starr ist.

7. Ventil nach einem der Ansprüche 1 bis 5, dadurch gekennzeichnet, daß der Endabschnitt (24) des Faltenbalges flexibel ist und eine Membran aufweist, und daß der Begrenzer (32) flexibel ist.

8. Ventil nach einem der Ansprüche 1 bis 5, dadurch gekennzeichnet, daß der Endabschnitt (24) des Faltenbalges im wesentlichen starr ist, und daß der Begrenzer (32) flexibel ist.

9. Ventil nach einem der vorhergehenden Ansprüche, dadurch gekennzeichnet, daß der Faltenbalg (22) im wesentlichen kegelstumpfförmig ist und daß der Endabschnitt (24) am schmaleren Ende liegt.

10. Ventil nach einem der Ansprüche 1 bis 9, dadurch gekennzeichnet, daß der Abführkanal (52) eine Durchgangsöffnung durch den Endabschnitt (24) des Faltenbalges und durch den Begrenzer (32) aufweist, und daß die Betätigungseinrichtung (20) ein Element (18) aufweist, das gegenüber dem Endabschnitt (24) des Faltenbalges und dem Begrenzer (32) verschiebbar ist, um die Durchgangsöffnung durch den Endabschnitt (24) und den Begrenzer (32) zu öffnen oder zu schließen, um die Faltenbalgkammer (b) in Verbindung mit der Auslaßkammer (c) zu bringen, oder die Verbindung zwischen der Faltenbalgkammer (b) und der Auslaßkammer (c) zu schließen.

11. Ventil nach Anspruch 10, dadurch gekennzeichnet, daß das Element (18) eine Armatur aus einem Solenoid ist.

12. Ventil nach einem der Ansprüche 1 bis 9, dadurch gekennzeichnet, daß der Abführkanal (52) einen Kanal aufweist, der sich zwischen der Faltenbalgkammer (b) und der Auslaßkammer (c) erstreckt, und daß die Betätigungseinrichtung (20) eine Einrichtung (42) zum Öffnen und Schließen des Kanals aufweist.

13. Ventil nach einem der vorhergehenden Ansprüche, gekennzeichnet durch eine Einrichtung (44) zur Veränderung des Mengendurchflußwiderstandes des Abführkanals (52), wenn dieser geöffnet ist, wodurch das Ventil an verschiedene stabile Positionen angepaßt werden kann, in welchen der Begrenzer (32) und der Endabschnitt (24) des Faltenbalges in jeweilig verschiedenem Ausmaß relativ voneinander weggebogen sind.

14. Ventil nach einem der vorhergehenden Ansprüche, dadurch gekennzeichnet, daß wenigstens die eine Öffnung (34, 36) in dem Begrenzer (32) derart ausgebildet ist, daß die ausgesetzte Fläche sich progessiv erhöht, wenn der Begrenzer (32) und der Endabschnitt (24) des Faltenbalges sich voneinander wegbiegen.

15. Ventil nach einem der vorhergehenden Ansprüche, dadurch gekennzeichnet, daß wenigstens die eine Zulauföffnung (54) eine Öffnung in dem Faltenbalg (22) aufweist, die direkt die Faltenbalg kammer (b) mit der Einlaßkammer (c) verbindet.

**Revendications**

1. Soupape comprenant:
— une chambre d'admission de fluide (a),
— une chambre de sortie de fluide (c),
— une chambre à soufflet (b) définie par un soufflet (22) et communiquant avec la chambre d'admission (a) à travers un trou de purge (54),
— un passage de décharge (52) pouvant faire communiquer la chambre à soufflet (b) avec la chambre de sortie (c), et
— un moyen de manoeuvre (20) qui:
(i) quand la soupape doit être ouverte, ouvre le passage de décharge (52) pour mettre la chambre à soufflet (b) en communication avec la chambre de sortie (c), et
(ii) quand la soupape doit être fermée, ferme le passage de décharge (52) pour interrompre la communication entre la chambre à soufflet (b) et la chambre de sortie (c), de sorte que la pression régnant dans la chambre à soufflet (b) augmente progessivement, grâce audit trou de purge (54), caractérisée en ce que,

Il est prévu un organe d'étranglement (32) présentant au moins un orifice (34, 36) et disposé entre les chambres d'admission et de sortie (a, c),

qu'au moins un organe d'étranglement (32) et une partie d'extrêmité (24) du soufflet (22) étant flexible et l'organe d'étranglement (32) ainsi que la partie d'extrêmité du soufflet (24) étant montés de manière à pouvoir buter l'un contre l'autre ou de pouvoir prendre et quitter la position de butée grâce à un déplacement qui comporte au moins une flexion de l'un au moins des éléments que sont l'organe d'étranglement (32) et la partie d'extrêmité du soufflet (24), l'un des trous (34, 36) au moins de l'organe d'étranglement (32) étant fermé ou ouvert selon que l'organe d'étranglement (32) et la partie d'extrêmité du soufflet (24) sont ou non en butée, et l'agencement étant tel que

(i) quand la soupape doit être ouverte, la baisse de pression résultante dans la chambre à soufflet (b) fait que l'organe d'étranglement (32) et la partie d'extrêmité du soufflet (24) quittent la position de butée pour établir la communication entre les chambres d'entrée et de sortie (a, c) par l'un des trous (34, 36) au moins de l'organe d'étranglement (32), et

(ii) quand la soupape doit être fermée l'organe d'étranglement (32) et la partie d'extrêmité du soufflet (24) viennent buter l'un contre l'autre pour fermer la soupape.

2. Soupape selon la revendication 1, dans laquelle l'organe d'étranglement (32) comprend un siège mobile qui, en position de fermeture de la soupape, prend appui contre un siège fixe (30), et le soufflet (22) engendre une force de sollicitation tendant à solliciter le siège mobile vers le siège fixe (30), de sorte que:

(a) quand la soupape est ouverte, la variation de pression différentielle entre les deux cotés du siège mobile due à ce que le siège cesse de buter contre la partie d'extrêmité du soufflet (24) permet au siège mobile et à la partie d'extrêmité du soufflet (24) de s'écarter du siège fixe (30) en réponse à des variations de la pression régnant dans les chambres, ce qui augmente ainsi l'importance de la communication entre les chambres d'admission et de sortie (a, c), et

(b) quand la soupape doit être fermée alors que le siège mobile et la partie d'extrêmité du soufflet (24) sont espacés du siège fixe (30), l'augmentation de pression provoquée par le trou de purge (54), dans la chambre à soufflet (b) contraint le siège mobile à venir d'abord en contact avec le siège fixe (30) sous l'influence de la force hydraulique résultant de la variation de pression et de force de sollicitation, afin de fermer partiellement la soupape, après quoi le siège mobile et la partie d'extrêmité du soufflet (24) viennent en butée de manière à fermer complètement la soupape.

3. Soupape selon la revendication 2, dans laquelle le siège mobile et la partie d'extrêmité du soufflet (24) sont fixés ensemble (40) de manière à empêcher un déplacement de translation relatif, de sorte que ledit mouvement du siège mobile et de la partie d'extrêmité du soufflet (24) en prenant ou en quittant la position de butée comprend presque essentiellement une flexion du siège mobile ou de la partie d'extrêmité du soufflet (24) au moins.

4. Soupape selon la revendication 2, dans laquelle le siège mobile et la partie d'extrêmité du soufflet (24) sont montés de telle sorte que ledit mouvement du siège mobile et de la partie d'extrêmité du soufflet (24) en prenant ou en quittant la position de butée, comprend un mouvement de translation relatif du siège mobile et de la partie d'extrêmité du soufflet (24) ainsi qu'une flexion du siège mobile ou de la partie d'extrêmité du soufflet (24) au moins.

5. Soupape selon l'une quelconque des revendications 2, 3 et 4 dans laquelle ladite force de sollicitation générée par le soufflet est due à ce que le soufflet (22) est d'une construction déformable élastiquement.

6. Soupape selon l'une quelconque des revendications 1 à 5, dans laquelle la partie d'extrêmité (24) du soufflet est flexible et comprend un diaphragme et l'organe d'étranglement (32) est essentiellement rigide.

7. Soupape selon l'une quelconque des revendications 1 à 5, dans laquelle la partie d'extrêmité (24) du soufflet est flexible et comprend un diaphragme, et l'organe d'étranglement (32) est flexible.

8. Soupape selon l'une quelconque des revendications 1 à 5 dans laquelle la partie d'extrêmité (24) du soufflet est essentiellement rigide, et l'organe d'étranglement (32) est flexible.

9. Soupape selon l'une quelconque des revendications précédentes, dans laquelle le soufflet (22) est de forme générale tronconique, ladite partie d'extrêmité (24) étant située à l'extrêmité rétrécie.

10. Soupape selon l'une quelconque des revendications 1 à 9, dans laquelle le passage de décharge (52) comprend un trou traversant la partie d'extrêmité du soufflet (24) et l'organe d'étranglement (32) et la moyen d'actionnement (20) comprend un organe (18) mobile par rapport à la partie d'extrêmité du soufflet (24) et l'organe d'étranglement (32) de façon à ouvrir ou fermer le trou traversant la partie d'extrêmité du soufflet (24) et l'organe d'étranglement (32) pour mettre la chambre de soufflet (b) en communication avec la chambre de sortie (c) ou interrompre la communication entre la chambre de soufflet (b) et la chambre de sortie (c).

11. Soupape selon la revendication 10, dans laquelle ledit organe (18) est une armature de solénoïde.

12. Soupape selon l'une quelconque des revendications 1 à 9, dans laquelle le passage de décharge (52) comprend un conduit s'étendant entre la chambre de soufflet (b) et la chambre de sortie (c) et le moyen d'actionnement (20) comprend un moyen (42) d'ouverture et de fermeture du conduit.

13. Soupape selon l'une quelconque des revendications précédentes, comprenant un moyen (44) pour faire varier la résistance au flux volumétrique du passage de décharge (52) en position d'ouverture, de façon que la soupape puisse adopter différentes positions stables dans lesquelles l'organe d'étranglement (32) et la partie d'extremité du soufflet (24) sont écartés par flexion à des degrés respectifs différents.

14. Soupape selon l'une quelconque des revendications précédentes, dans laquelle un orifice (34, 36) au moins de l'organe d'étranglement (32) est tel que sa surface exposée augmente de façon progressive à mesure que l'organe d'étranglement (32) et la partie d'extrêmité du soufflet (24) sont écartés l'un de l'autre par flexion.

15. Soupape selon l'une quelconque des revendications précédentes, dans laquelle un trou de purge (54) au moins comprend un trou percé dans le soufflet (22) qui fait communiquer directement la chambre de soufflet (b) et la chambre d'admission (a).

FIG.1

FIG.2

FIG.3

FIG.4

FIG.5

FIG.6

FIG.7

FIG.8

FIG.9

FIG.10

FIG.11

FIG.12